# EUROPÄISCHE PATENTANMELDUNG

(11) **EP 1 336 447 A1**
(43) Veröffentlichungstag der Anmeldung: **20.08.2003**
(21) Anmeldenummer: 03000979.9
(22) Anmeldetag: 17.01.2003
(51) Int. Cl.: B23K 26/04, B62D 27/02

(54) **Verfahren zum Laserschweissen von Blechformteilen**

(30) Priorität: 19.02.2002 DE 10206887
(71) Anmelder: ThyssenKrupp Drauz GmbH, 74076 Heilbronn (DE)
(72) Erfinder: Stein, Hans, 09337 Hohenstein-Ernstthal (DE); Schwab, Josef, 09337 Hohenstein-Ernstthal (DE)
(74) Vertreter: Illing, Ralf, Dipl.-Jur. Ing.

(57) **Zusammenfassung**

Die Erfindung betrifft ein Verfahren zum Laserschweißen von Blechformteilen mit Schweißflanschen, insbesondere von Karosserieteilen für Kraftfahrzeuge.

Es ist Aufgabe der Erfindung, ein gattungsgemäßes Verfahren zum Laserschweißen von Blechformteilen 1 mit Schweißflanschen 15 zu schaffen, bei dem Korrekturen von Ungenauigkeiten bei Maßen und Formen der zu verschweißenden Blechformteile 1 möglich sind sowie Beschädigungen der Blechoberfläche vermieden werden.

Diese Aufgabe wird erfindungsgemäß dadurch gelöst, dass die Blechformteile 1 flanschfrei gespannt werden; dass die Spannung lage- und/oder kraftgeregelt in Abhängigkeit vom Soll/Istwertvergleich der Maße und/oder der Oberfläche des geschweißten Blechformteiles 1 erfolgt; dass die Schweißflansche 15 jeweils an der Schweißstelle wandernd aneinander gepresst und dort fortlaufend oder absatzweise verschweißt werden.

## Beschreibung

Die Erfindung betrifft ein Verfahren zum Laserschweißen von Blechformteilen mit Schweißflanschen, insbesondere von Karosserieteilen für Kraftfahrzeuge.
Beim Laserschweißen von Karosserieteilen für Kraftfahrzeuge ist allgemein bekannter Stand der Technik, die zu verschweißenden Teile auf den Schweißflanschen zu spannen, um dadurch für den Schweißvorgang günstige Voraussetzungen zu schaffen. Die dafür bekannten käuflichen Spannvorrichtungen haben eine konstante Haltekraft, die bei der Planung der Schweißvorrichtungen in Abhängigkeit von der Masse der Karosserieteile und der beim Schweißvorgang auftretenden Kräfte festgelegt wird. Dabei ist es gängige Praxis, die Haltekraft höher zu wählen als die errechneten Werte, um damit eventuellen Unwägbarkeiten im Bearbeitungsvorgang zu begegnen. Da die Spannvorrichtungen auf die Schweißflansche wirken, ist es kein Nachteil, wenn dadurch die Blechoberfläche beschädigt wird, da die Schweißflansche am fertiggestellten Kraftfahrzeug abgedeckt sind.
Von erheblichem Nachteil ist aber die Anordnung der Spannvorrichtungen auf den Schweißflanschen, da sie dort den mit sehr schnellen Vorschüben ausgeführten Laserschweißvorgang stören.
Ein weiterer Nachteil der bekannten käuflichen Spannvorrichtungen und ihrer gängigen Verwendung ist, dass sie auf den Rohbauschweißvorrichtungen an den vom Karosseriehersteller festgelegten Spannpunkten angebracht werden. Obwohl die Lage der zu spannenden Karosserieteile zusätzlich durch Zentriermittel an den RPS-Punkten bestimmt wird, werden dabei alle Ungenauigkeiten der gepressten Karosserieteile, die durch den Pressvorgang, die Toleranzen in der Blechstärke und Werkstoffzusammensetzung sowie den Transport entstehen, annähernd vollständig übernommen und gehen in die fertige Karosserie ein, da keine Korrekturmöglichkeiten beim Spannvorgang vorhanden sind (DE 198 28 235 A1).

Es ist Aufgabe der Erfindung, ein gattungsgemäßes Verfahren zum Laserschweißen von Blechformteilen mit Schweißflanschen zu schaffen, bei dem die zum Stand der Technik aufgezeigten Probleme vermieden werden und Korrekturen von Ungenauigkeiten bei Maßen und Formen der zu verschweißenden Blechformteile möglich sind sowie Beschädigungen der Blechoberfläche vermieden werden.

Erfindungsgemäß wird die Aufgabe durch die Verfahrensschritte des Patentanspruches 1 gelöst. Die Patentansprüche 2 und 3 beinhalten Ausführungsvarianten der Verfahrensmerkmale des Patentanspruches 1.
Durch die lage- und/oder kraftgeregelte Spannung in Abhängigkeit vom Soll/Istwertvergleich der Maße und/oder der Oberflächen des geschweißten Blechformteiles können die Blechformteile flanschfrei gespannt werden, ohne dass die Blechoberfläche beschädigt wird. Dieser Umstand ist vor allem für Blechaußenteile von großem Vorteil. Die flanschfreie Spannung ergibt zusätzlich die Möglichkeit, Ungenauigkeiten der Blechformteile zu korrigieren. Auf diese Weise werden maßhaltige Karosserien und Karosserieteile für Kraftfahrzeuge hergestellt, die deren weitere Verarbeitung zum fertiggestellten Kraftfahrzeug wesentlich verbessern.
Der Zeitpunkt des Soll/Istvergleiches der Maße und/oder der Oberfläche und der Eingabe der Korrekturwerte in die Steuerungen ist vom für die jeweilige Fertigung vertretbaren Aufwand abhängig. Durch die Maßkontrolle nach dem Schweißen und entsprechende automatische Stellmaßnahmen ist eine Korrektur der Maßabweichungen am geschweißten Blechformteil möglich.

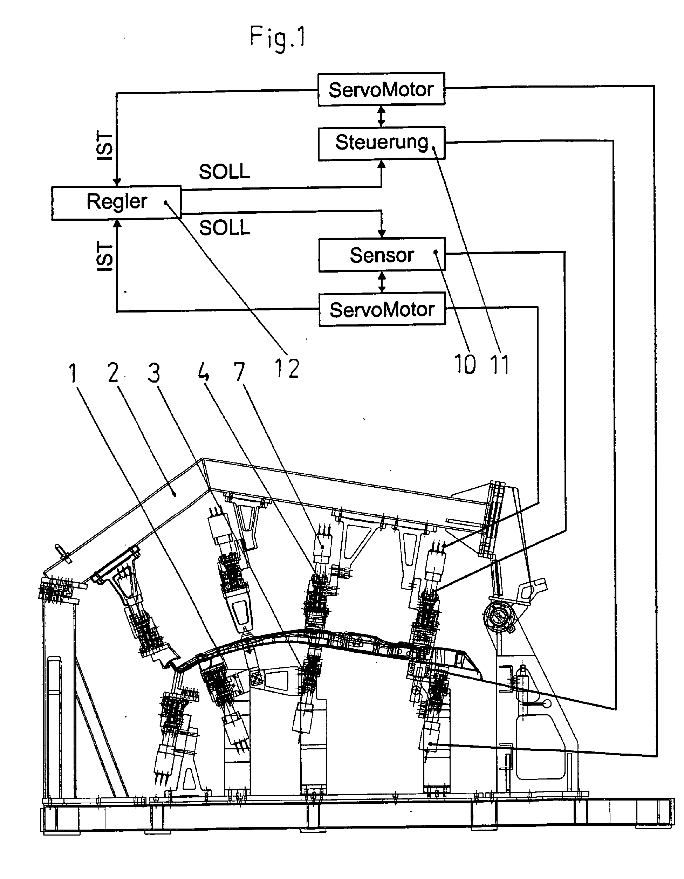

Die Erfindung ist an einem Ausführungsbeispiel erläutert.
In der Zeichnung zeigt
Fig. 1 einen Spannrahmen für einen Türholm mit Blockschaltbild und

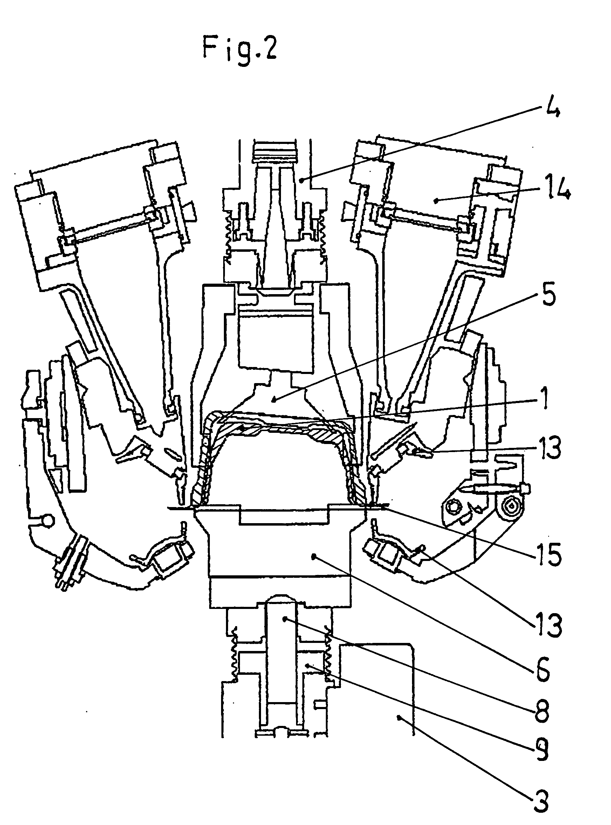

Fig.2 einen Querschnitt durch eine Spannstelle.

Im Ausführungsbeispiel werden die Blechformteile eines Türholmes 1 für eine Kraftfahrzeugkarosserie verschweißt. In einem aufklappbaren Spannrahmen 2 sind vier Paar Spannvorrichtungen 3;4 so angeordnet, dass jeweils eine Spannvorrichtung 3 des Paares am stationären Teil des Spannrahmens 2 positioniert ist und die andere Spannvorrichtung 4 gegenüberliegend am aufklappbaren Teil des Spannrahmens 3. Zwischen beiden Spannvorrichtungen 3;4 befinden sich die Blechformteile des Türholmes 1, die mittels Laser zusammengeschweißt werden sollen. Die Anordnung der Spannvorrichtungspaare 3;4 zum Türholm 1 ist so gewählt, dass sie an den beim Laserschweißen verformungsgefährdeten Stellen angreifen. Die Spannvorrichtungen 3;4 sind mit Kontaktflächen 5;6 versehen, die der jeweiligen Form und Steife des Türholmes 1 an der Spannstelle entsprechen. Die Kontaktflächen 5;6 können somit als Sauger 5 oder elastisches Kissen oder Plastformteil oder Stahlformteil 6 ausgebildet sein. Die Verstellbewegungen der Spannvorrichtungen 3;4 werden jeweils durch einen stufenlos steuerbaren Servo-Motor 7 und eine Gewindespindel 8 mit Mutter 9 ausgeführt. An der Aufnahme für die Kontaktflächen 5;6 ist ein Sensor 10 so befestigt, dass er die Berührung der Oberfläche des Türholmes 1 durch die Kontaktfläche 5 meldet und somit der Positionserfassung des Türholmes 1 dient. Die elektronischen Steuerungen 11 der Servo-Motoren 7 jeweils eines Spannvorrichtungspaares 3;4 erhalten von einem Regler 12 die Sollwerte für die Position vorgegeben, die sich aus den Sollmaßen des Türholmes 1 ergeben. Auf diese Werte stellen die Servo-Motoren 7 der Spannvorrichtungen 3;4 die Kontaktflächen 5;6 an die Oberflächen des Türholmes 1 an. Dabei erfassen die Sensoren 10 an den Kontaktflächen 5;6 die Ist-Positionen der Oberflächen des Türholmes 1 und geben diese an den Regler 12 ein. Durch die elektronischen Steuerungen 11 der Servo-Motoren 7 werden aus den ausgeübten Drehmomenten die Auflagekräfte der Kontaktflächen 5;6 auf den Oberflächen des Türholmes 1 ermittelt und an den Regler 12 gemeldet. Durch Soll/Istwertvergleiche im Regler 12 werden den elektronischen Steuerungen 11 der Servo-Motoren 7 entsprechende Korrekturwerte eingegeben. Die Regler 12 der Spannvorrichtungspaare 3;4 sind auf einen gemeinsamen Rechner geschaltet, dessen Software die Prioritäten der einzelnen Spannvorrichtungspaare 3;4 zueinander bestimmt. Über den gemeinsamen Rechner werden auch Korrekturwerte eingegeben und verteilt, die sich aus der Kontrolle des geschweißten Türholmes 1 ergeben.
Diese Korrekturwerte können erfindungsgemäß auch während der Spannung des Türholmes 1 durch zusätzlich angeordnete Lasermesssysteme ermittelt und simultan dem Rechner eingegeben werden. Dieser korrigiert dann sofort die Lage und/oder das Drehmoment des Servo-Motors 7 der jeweiligen Spannvorrichtung 3;4. Damit ist eine fehlerhafte Form der Oberfläche und Geometrie des zu schweißenden Türholmes 1 vor seiner Fertigstellung gerichtet.

Nachdem so der Spannvorgang optimiert ist, pressen die abrollenden Spannkegel 13 der jeweiligen Laserschweißvorrichtung 14 die Schweißflansche 15 der Blechformteile des Türholmes 1 jeweils an der Schweißstelle zusammen und wandern gemeinsam mit dem Laserschweißstrahl auf den Schweißflanschen 15 entlang, ohne dass die Spannvorrichtungen 3;4 der Blechformteile des Türholmes 1 diesen Vorschubbewegungen störend im Wege sind.

### Bezugszeichenliste

- 1: Türholm
- 2: Spannrahmen
- 3: Spannvorrichtung
- 4: Spannvorrichtung
- 5: Kontaktfläche
- 6: Kontaktfläche
- 7: Servo-Motor
- 8: Gewindespindel
- 9: Mutter
- 10: Sensor
- 11: elektronische Steuerung
- 12: Regler
- 13: Spannkegel
- 14: Laserschweißvorrichtung
- 15: Schweißflansche

## Patentansprüche

1. Verfahren zum Laserschweißen von Blechformteilen mit Schweißflanschen insbesonder von Karosserieteilen für Kraftfahrzeuge,
**dadurch gekennzeichnet,**
**dass** die Blechformteile (1) flanschfrei gespannt werden,
**dass** die Spannung Lage- und/oder kraftgeregelt in Abhängigkeit vom Soll/Istwertvergleich der Maße und/oder der Oberflächen des geschweißten Blechformteiles (1) erfolgt,
**dass** die Schweißflansche (15) jeweils an der Schweißstelle wandernd aneinander gepresst und dort fortlaufend oder absatzweise verschweißt werden.

2. Verfahren zum Laserschweißen nach Anspruch 1,
**dadurch gekennzeichnet,**
**dass** der Soll/Istwertvergleich der Maße und/oder der Oberflächen am fertig geschweißten Blechformteil (1) erfolgt und die sich daraus ergebenden Korrekturwerte für Position und Spannkraft den Steuerungen (11) der jeweiligen Spannstellen (3;4) eingegeben werden.

3. Verfahren zum Laserschweißen nach Anspruch 1,
**dadurch gekennzeichnet,**
**dass** der Soll/Istwertvergleich der Maße und der Oberfläche während des Spannvorganges und/oder Schweißvorganges des Blechformteiles (1) erfolgt und Abweichungen simultan korrigiert werden.
